Europäisches Patentamt

European Patent Office

Office européen des brevets

(19)

(11) Veröffentlichungsnummer: **0 049 790**
**B1**

(12) **EUROPÄISCHE PATENTSCHRIFT**

(45) Veröffentlichungstag der Patentschrift:
15.02.84

(51) Int. Cl.³: **E 04 B 1/76, F 24 D 11/00**

(21) Anmeldenummer: 81107605.8

(22) Anmeldetag: 24.09.81

(54) **Verfahren zur Ausnutzung niederwertiger Energie bei der Beheizung von Gebäuden.**

(30) Priorität: 10.10.80 DE 3038335

(43) Veröffentlichungstag der Anmeldung:
21.04.82 Patentblatt 82/16

(45) Bekanntmachung des Hinweises auf die Patenterteilung:
15.02.84 Patentblatt 84/7

(84) Benannte Vertragsstaaten:
AT BE CH DE FR GB IT LI LU NL SE

(56) Entgegenhaltungen:
FR - A - 1 243 499
FR - A - 2 414 694
LU - A - 81 542

DIE BAUTECHNIK, Heft 7, 1980, Seiten 235-247 Berlin,
DE. F. HAFERLAND: "Durchströmte
Fassadenkonstruktionen zur natürlichen und
künstlichen Regulierung des thermischen
Raumklimas-II"

(73) Patentinhaber: Schilling, Heinz, Möhlenring 53,
D-4152 Kempen 1 (DE)

(72) Erfinder: Schilling, Heinz, Möhlenring 53,
D-4152 Kempen 1 (DE)

(74) Vertreter: Stark, Walter, Dr.-Ing., Moerser Strasse 140,
D-4150 Krefeld (DE)

Verfahren zur Ausnutzung niedewertiger Energie bei der Beheizung von Gebäuden.

Die Erfindung betrifft ein Verfahren zur Ausnutzung niederwertiger Energie bei der Beheizung von Gebäuden mit mehrschichtigen Wandungen, wobei wenigstens eine Schicht der Wandungen mit einem niederwertige Energie führenden Wärmeträgermedium erwärmt wird.

Es ist bekannt, niederwertige Energie für die Beheizung von Gebäuden auszunutzen. Insbesondere bei Fassadenkonstruktionen aus Holz ist bereits vorgeschlagen worden, auf Heizkörper ganz zu verzichten und die Wandungen nicht nur für die Raumheizung zu verwenden, sondern auch zur Ausnutzung der Wärmeenergie der Aussenluft (Zeitschrift «Die Bautechnik», Heft 7, 1980, Seiten 235–247). Dazu werden in der Wandung aussenseitig und innenseitig Leitungssysteme verlegt, die in ein Heizungssystem integriert sind, welches auch eine Wärmepumpe und eine Stuerung umfasst. Das durch die innenseitigen Leitungen strömende Wärmeträgermedium muss eine Temperatur aufweisen, die höher als die Raumtemperatur liegt. Das durch das aussenseitige Leitungssystem strömende Wärmeträgermedium muss eine Temperatur aufweisen, die geringer als die Aussentemperatur ist. Ähnliches wurde auch für mehrschichtige Wandungen aus Beton vorgeschlagen (FR-A-24 14 694).

Andererseits hängt die rationelle Energieausnutzung bei der Beheizung von Gebäuden wesentlich vom Wärmeverlust ab, d.h. von der durch die Wandungen des Gehäuses fliessenden Wärme. Dieser Wärmeverlust wird definiert durch das Produkt aus gesamter Fläche (z.B. Aussenfläche des Gebäudes), Wärmeübergangszahl (der Wandungen) und Temperaturdifferenz zwischen Innentemperatur und Aussentemperatur. Da die Fläche der Aussenwandungen eines Gebäudes bei vorgegebenen Abmessungen des Gebäudes kaum reduziert werden kann, und die Temperaturdifferenz bei vorgegebener Innentemperatur von Witterungseinflüssen abhängig ist, hat man sich bemüht, die Wärmedurchgangszahl der Wandungen soweit wie möglich zu verringern, z.B. durch mehrschichtigen Aufbau und durch Anordnung einer oder mehrerer Schichten aus isolierendem Material mit geringer Wärmedurchgangszahl. Das ändert jedoch nichts daran, dass zur Beheizung des Gebäudes stets verhältnismässig hochwertige Energie verwendet werden muss, um die Innentemperatur auch bei niedrigen Aussentemperaturen auf den gewünschten Wert zu halten. Die Ausnutzung niederwertiger Energie zur Beheizung eines Gebäudes nach herkömmlichen Systemen funktioniert jedoch nur solange, als die Temperaturen der dabei verwendeten Wärmeträger höher als die gewünschten Innentemperaturen im Gebäude liegen. Liegen die Temperaturen niedriger als die gewünschten Innentemperaturen des Gebäudes, dann kann man zwar Wärmepumpen einsetzen, diese erfordern aber komplizierte Systeme und ausserdem zusätzlich höherwertige Energie in Form von Strom.

Aufgabe der Erfindung ist es, den technischen Aufwand bei der Nutzung niederwertiger Energie zu veringern.

Diese Aufgabe wird bei dem Verfahren der eingangs beschriebenen Gattung daduch gelöst, dass zum Beeinflussen des Wärmeübergangs die jeweils äussere Schicht der Wandungen auf eine zwischen Innentemperatur und Aussentemperatur liegende Temperatur erwärmt wird.

Bei dem erfindungsgemässen Verfahren wird die niederwertige Energie nicht unmittelbar zur Beheizung des Gebäudes oder des Bauteils eingesetzt sondern zur Reduzierung der Temperaturdifferenz zwischen Innenseite und Aussenseite der Wandung, so dass im Sinne der oben angegebenen Beziehung für den Wärmeverlust bzw. den Wärmedurchgang die Temperaturdifferenz und nicht die Fläche oder die Wärmedurchgangszahl beeinflusst wird. Geht man davon aus, dass Wärmeträgermedien für niederwertige Energie in Form von Abluft, Abwasser, Kühlluft, Kühlwasser, Grundwasser u. dgl. in ausreichender Menge zur Verfügung stehen, dann lässt sich diese niederwertige Energie auch dann für Beheizungszwecke von Gebäuden oder Bauteilen einsetzen, wenn die Temperaturen des Wärmeträgermediums unterhalb der gewünschten Innentemperaturen des Gebäudes liegen.

Insbesondere bei Gebäuden mit wenigstens zweischichtigen Wandungen kann die jeweils äussere Schicht der Wandungen mit dem Wärmeträgermedium beheizt werden, das eine zwischen Innentemperatur und Aussentemperatur liegende Temperatur aufweist. Wenn beispielsweise die Innentemperatur des Gebäudes 22°C beträgt und die Aussentemperatur −12°C, dann kann mit einem Wärmeträgemedium, dessen Temperatur ca. 10°C beträgt, die Aussentemperatur der Wandungen im Bereich von 10°C gehalten werden, wodurch sich ein Wärmedurchgang bzw. Wärmeverlust ergibt, der lediglich einer Temperaturdifferenz von ca. 12°C anstatt 34°C ergibt. Das funktioniert so lange, wie die Temperatur des Wärmeträgermediums höher ist als die tatsächliche Aussentemperatur des Gebäudes.

Bei einer Wandung zur Durchführung des Verfahrens mit Mauerwerk und äusserer Isolierschicht, ist ein Leitungssystem für den Durchfluss des Wärmeträgermediums innerhalb der äusseren Isolierschicht verlegt.

Wenn das Wärmeträgermedium für die niederwertige Energie nicht ständig zur Verfügung steht, kann ein Gebäude mit den oben beschriebenen Wandungen ausserdem auch einen Speicher für das Wärmeträgermedium aufweisen sowie zu dem Leitungssystem in den Wandungen führende Anschlussleitungen und ggf. eine oder mehrere Pumpen, die das Wärmeträgermedium aus dem Speicher in das Leitungssystem der Wandungen und von dort wieder in den Speicher oder zu einer anderen Stelle pumpen.

Vorteilhaft ist auch eine Ausführungsform, bei der im Speicher wenigstens ein Wärmetauscher angeordnet ist. Dieser Speicher ist z.B. ständig mit Wasser gefüllt, das bei Bedarf durch das Leitungssystem der Wandungen geführt wird. Über den oder die Wärmetauscher im Speicher fliessen Wärmetauschermedien anderer Art, z.B. Wasser oder Dampf aus einer Fernwärmeleitung, Wasser aus einem Tiefbrunnen, in Sonnenkollektoren aufgeheiztes Wasser, Abwasser, Kühlwasser, Kühlluft od. dgl., die das im Speicher befindliche Wasser auf eine vergleichsweise niedrige Temperatur erwärmen, die jedoch für den angegebenen Zweck ausreicht. Unter Umständen kann als Wärmeträgermedium auch eine Sole verwendet werden.

Im folgenden werden in der Zeichnung dargestellte Ausführungsbeispiele der Erfindung erläutert; es zeigen:

Fig. 1 teilweise einen Querschnitt durch eine Gebäudewandung,
Fig. 2 in schematischer Darstellung ein System zur Beheizung der Gebäudewand nach Fig. 1 mit niederwertiger Energie.

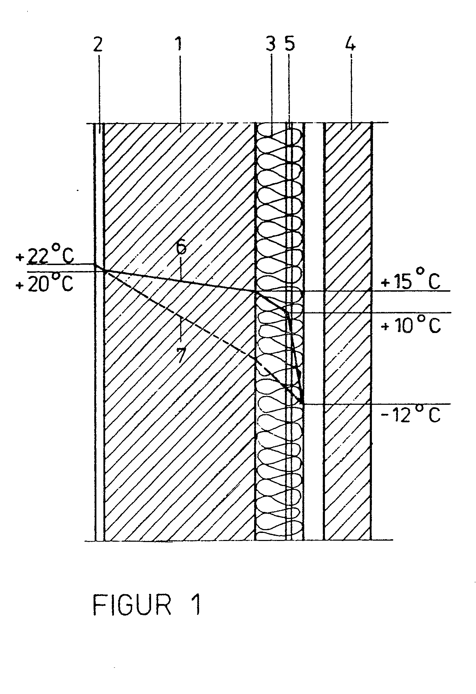

Die in Figur 1 dargestellte Gebäudewandung besteht in ihrem grundsätzlichen Aufbau aus einer Schicht 1 aus tragendem Mauerwerk od. dgl., einer innenseitigen Putzschicht 2, einer äusseren Isolierschicht 3 und einer hinterlüfteten Fassade 4. Die Isolierschicht 3 weist ein nur angedeutetes Leitungssystem 5 auf, durch das ein Wärmeträgermedium, beim dargestellten Ausführungsbeispiel Wasser, geführt ist.

Ausserdem enthält die Figur 1 Temperaturangaben, nämlich die Innentemperatur des Gehäuses mit 22°C, die Temperatur der Putzschicht 2 mit ca. 20°C, die Temperatur im Übergangsbereich zwischen dem Mauerwerk 1 und der Isolierschicht 3 mit ca. 15°C, die Temperatur des durch das Leitungssystem 5 geführten Wärmeträgermediums mit ca. 10°C und die Aussentemperatur mit ca. −12°C. Die entsprechenden Temperaturpunkte sind durch eine Linie 6 verbunden, die den Wärmeübergang bzw. den Wärmeverlust durch die Gebäudewandung charakterisiert. Die jeweilige Steigung der Linie 6 kann als Mass für den Wärmefluss angesehen werden.

Das durch das Leitungssystem 5 geführte Wärmeträgermedium führt niederwertige Energie mit sich, d.h. seine Temperatur liegt zwischen der Innentemperatur im Gebäude und der Aussentemperatur, beim dargestellten Ausführungsbeispiel bei ca. 10°C. Weil die Isolierschicht durch dieses Wärmeträgermedium auf eine über der Aussentemperatur liegende Temperatur erwärmt wird, verringerte sich auch der Wärmedurchgang bzw. Wärmeverlust durch die Wandung insgesamt, weil die für den Wärmeverlust bzw. Wärmeübergang durch die Wandung verantwortliche Temperaturdifferenz entsprechend reduziert wird. Folglich braucht zur Beheizung des Gebäudes weniger hochwertige Energie in Form von Kohle, Öl, Strom od. dgl., aufgewendet zu werden. Die vom Wärmeträgermedium im Leitungssystem 5 mitgeführte niederwertige Energie steht in der Regel in ausreichender Menge zur Verfügung, weil es sich dabei um Abfallenergie oder um Energieformen handeln kann, bei denen keine höheren Temperaturen erreichar sind.

In Figur 1 ist mit gestrichelten Linien ausserdem noch eine Linie 7 eingetragen, die den wesentlich grösseren Wärmeverlust bzw. Wärmeübergang durch die Wandung andeuten soll, wenn auf die Erwärmung der Isolierschicht 3 mit niederwertiger Energie verzichtet wird.

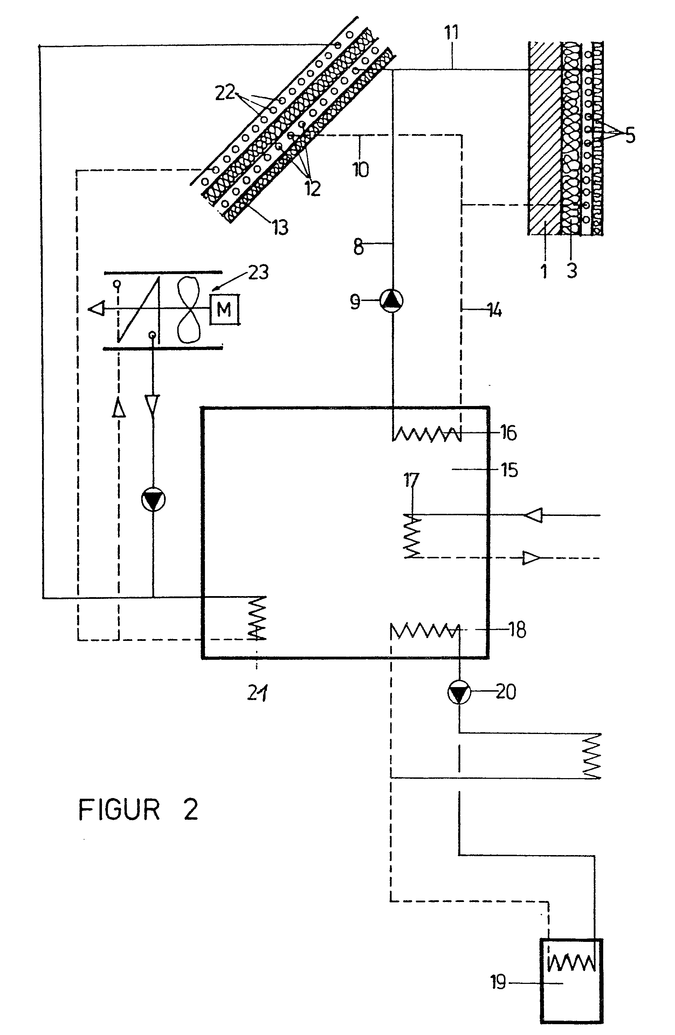

In Figur 2 ist in der rechten oberen Ecke ein Teil der Gebäudewandung mit dem Mauerwerk 1 und der Isolierschicht 3 sowie dem Leitungssystem 5 dargestellt. Das Leitungssystem 5 ist über eine Anschlussleitung 8 mit einer daran angeordneten Pumpe 9 und über eine Rücklaufleitung 14 an einen im Gebäude installierten Speicher 15 angeschlossen. Von der Anschlussleitung 8 bzw. der Rücklaufleitung 14 gehen Zweigleitungen 10, 11 zu einem Leitungssystem 12 in einer Dachisolierung 13 ab.

Die Anschlussleitung 8 und die Rücklaufleitung 14 münden an einem im Speicher 15 angeordneten Wärmetauscher 16. Sie können aber auch direkt in den Speicher münden, der beim dargestellten Ausführungsbeispiel mit Wasser gefüllt ist.

Der Speicher 15 enthält wenigstens einen weiteren Wärmeaustauscher, um das im Speicher befindliche Wasser auf eine oberhalb der Aussentemperatur liegende Temperatur zu erwärmen.

In Figur 2 sind mehrere Möglichkeiten angedeutet, wie das im Speicher 15 befindliche Wasser erwärmt werden kann, nämlich über einen Wärmetauscher 17, der an ein Fernwärmesystem angeschlossen ist und/oder vom Kühlwasser eines Kraftwerkes od. dgl. durchströmt ist, oder über einen Wärmetauscher 18, der von aus einem Brunnen 19 mit Hilfe einer Pumpe 20 geförderten Grundwasser durchströmt ist, oder über einen Wärmetauscher 21, der an einen Sonnenkollektor 22 auf dem Dach des Gebäudes und/oder an ein Abluftsystem 23 angeschlossen ist.

In allen Fällen wird das im Speicher 15 befindliche Wasser mit niederwertiger Energie auf Temperaturen aufgeheizt, die oberhalb der Aussentemperatur liegen und in der Regel unterhalb der gewünschten Innentemperatur des Gebäudes liegen. Das bedeutet, dass die Temperatur im Speicher 15 zwischen 10 und 20°C liegt. Wird das im Speicher 15 befindliche Wasser entweder direkt oder über den Wärmetauscher 16 den Leitungssystemen 5 bzw. 12 zugeführt, dann kann dadurch der Wärmeverlust durch Wandung und Dach des Gebäudes erheblich reduziert werden und kann dementsprechend bei der Beheizung des Gebäudes an hochwertiger Energie gespart werden.

## Patentansprüche

1. Verfahren zur Ausnutzung niederwertiger Energie bei der Beheizung von Gebäuden mit mehrschichtigen Wandungen, wobei wenigstens eine Schicht der Wandungen mit einem niederwertige Energie führenden Wärmeträgermedium erwärmt wird, dadurch gekennzeichnet, dass zum Beeinflussen des Wärmeübergangs die jeweils äussere Schicht der Wandungen auf eine zwischen Innentemperatur und Aussentemperatur liegende Temperatur erwärmt wird.

2. Verfahren nach Anspruch 1, dadurch gekennzeichnet, dass als Wärmeträgermedium für die niederwertige Energie Abluft, Abwasser, Kühlluft, Kühlwasser, Grundwasser oder dergleichen verwendet wird.

3. Wandung zur Durchführung des Verfahrens nach Anspruch 1 oder 2, mit Mauerwerk (1) und äusserer Isolierschicht (3), dadurch gekennzeichnet, dass innerhalb der äusseren Isolierschicht (3) ein Leitungssystem (5) für den Durchfluss des Wärmeträgermediums verlegt ist.

4. Gebäude mit Wandungen nach Anspruch 3, gekennzeichnet durch einen Speicher (15) für das Wärmeträgermedium, durch Anschlussleitungen (8, 14) zum Leitungssystem (5, 12) in den Wandungen und gegebenenfalls durch eine oder mehrere Pumpen (9).

5. Gebäude nach Anspruch 4, dadurch gekennzeichnet, dass im Speicher (15) wenigstens ein Wärmetauscher (16, 17, 18, 21) angeordnet ist.

## Claims

1. A method for using low grade energy for the heating of buildings having multilayer walls, wherein at least one laer of the walls is heated with a heat-carrying medium containing low grade energy, characterized in that in order to influence heat transfer the outer layer of the walls is heated to a temperature beetween the internal temperature and the external temperature.

2. A method according to claim 1, characterized in that used air, waste water, cooling air, cooling water, ground water or the like is used as the heat-carrying medium for the low grade energy.

3. A wall for carrying out the method according to claim 1 or 2 having brickwork (1) and an outer insulating layer (3), characterized in that a ducting system (5) is provided in the outer insulating layer (3) for the through-flow of the heat-carrying medium.

4. A building having walls according to claim 3, characterized by a reservoir (15) for the heat carrying medium, connecting ducts (8, 14) for the ducting system (5, 12) in the walls and, where appropriate, one or more pumps (9).

5. A building according to claim 4, characterized in that at least one heat exchanger (16, 17, 18, 21) is arranged in the reservoir (15).

## Revendications

1. Procédé pour exploiter l'énergie secondaire dans le chauffage de bâtiments munis de murs à plusieurs couches, dans lequel on chauffe au moins une couche des murs avec un caloporteur véhiculant de l'énergie secondaire, caractérisé par le fait que pour influencer le transfert de chaleur, on chauffe la couche chaque fois extérieure des murs à une température se situant entre la température intérieure et la température extérieure.

2. Procédé selon la revendication 1, caractérisé par le fait que comme caloporteur pour l'énergie secondaire, on utilise de l'air usé, de l'eau usée, de l'air de refroidissement, de l'eau de refroidissement, de l'eau souterraine ou des milieux similaires.

3. Mur pour la mise en œuvre du procédé selon l'une des revendications 1 et 2, avec maçonnerie (1) et couche isolante extérieure (3), caractérisé par le fait qu'à l'intérieur de la couche isolante extérieure (3) est posé un système de tuyauterie (5) pour l'écoulement du caloporteur.

4. Bâtiment muni de murs selon la revendication 3, caractérisé par un acumulateur (15) destiné au caloporteur, par des tuyaux de raccordement (8, 14) au système de tuyauterie (5, 12) des murs et éventuellement par une ou plusieurs pompes (9).

5. Bâtiment selon la revendication 4, caractérisé par le fait que dans l'accumulateur (15) est disposé au moins un échangeur thermique (16, 17, 18, 21).

FIGUR 1

FIGUR 2